# EUROPEAN PATENT SPECIFICATION

(11) **EP 2 743 946 B1**
(45) Date of publication and mention of the grant of the patent: **11.10.2017**
(21) Application number: 13180311.6
(22) Date of filing: 13.08.2013
(51) Int. Cl.: H01G 9/20, C25B 1/00

(54) **Use of Material, Especially an Eutectic One, as an Active Layer in an Electrode and an Electrode Comprising an Active Layer of Material, Especially an Eutectic One**
Verwendung von Material, insbesondere einer eutektischen Art als aktive Schicht in einer Elektrode und eine Elektrode mit einer aktiven Schicht aus Material, insbesondere einer eutektischen
Utilisation de matériau, en particulier un eutectique, en tant que couche active dans une électrode et électrode comprenant une telle couche, en particulier constituée d'un eutectique

(30) Priority: 13.12.2012 PL 40202912
(43) Date of publication of application: 18.06.2014
(73) Proprietor: Instytut Technologii Materialów Elektronicznych, 01-919 Warszawa (PL)
(72) Inventor: Pawlak, Dorota Anna, 01-885 Warszawa (PL); Bienkowski, Krzysztof, 00-732 Warszawa (PL); Kolodziejak, Katarzyna, 02-679 Warszawa (PL); Orlinski, Krzysztof, 04-327 Warszawa (PL)
(74) Representative: Sielewiesiuk, Jakub

(56) References cited:
- EP-A1- 0 587 974
- JP-A- 2006 063 426
- US-A- 4 144 147
- US-B1- 6 284 215
- Krzysztof Bienkowski ET AL: "Growth of a Plate-Shaped SrTiO 3 ÀTiO 2 Eutectic", Growth Des, 13 July 2011 (2011-07-13), pages 3935-3940, XP055133956, DOI: 10.1021/cg2005369 Retrieved from the Internet: URL:http://www.researchgate.net/publicatio n/231231534_Growth_of_a_Plate-Shaped_SrTiO 3TiO2_Eutectic/file/9c96051e70681aaffb.pdf [retrieved on 2014-08-08]

## Description

The object of the invention are electrodes, especially photoanodes, used particularly in photoelectrochemical cells as working electrodes. In greater detail, these are photoelectrodes on which there occurs the process of the decomposition of water into oxygen and charges are generated which are transferred through an electric circuit to electrodes on which hydrogen is obtained, with the use of the electromagnetic (including solar) radiation energy.

The electrodes used to oxidise water in the process of photolysis (particularly, the photoanodes) must meet several important requirements [1,2]:
a) They must absorb photons which are sufficiently highly energetic for the water photolysis process to take place.
b) They must be stable during this process.
c) They must exhibit the maximum possible efficiency - the band gap of the materials must be within the visible range.
d) The method of production and preparation should offer the industrial scale use potential (possibility of graduating, cheap input materials).

In the prior art, such electrodes were built with the use of, among others, oxide materials in the form of powder, with a possible addition of a catalyst. The material so prepared was brought into contact with water steam while being exposed to the electromagnetic (UV or visible) radiation. The publication [1] contains a wide review of various materials and catalysts, used in the form of powder.

The method, known in the prior art, of applying the aforementioned materials in the form of milled grains on the surface of an electrode is the sol-gel method [2].

According to the disclosure contained in the publication [2], in the prior art the problem has been identified with the selection of materials suitable for use to build the photoanode for water photolysis. On one hand - these materials must fulfil the conditions indicated in items a)-d) above. On the other hand - for obvious reasons, they must be chemically stable when in contact with water (e.g. in the form of steam). The oxide materials indicated above are chemically stable. However, in most cases, the band gap of these oxide materials is too big for an effective absorption of the visible light.

There is a need then to find new materials, materials suitable for photoanodes, fulfilling the conditions indicated in items a)-d) above and being chemically stable when in contact with an electrolyte (which can possible contain various substances such as acids, bases, NaCl and others), especially with the aqueous solution of the electrolyte.

Therefore, the purpose of the present invention is to provide a photoanode, especially for photoelectrochemical cells for water photolysis, which fulfils the aforementioned conditions. It has unexpectedly turned out that the electrodes in which the active layer is made of eutectic materials can meet all these requirements.

None of the publications known to the creators of the present invention discloses or suggests using such materials to build the active (photoactive) layer in photoelectrodes (especially: in photoanodes).

The active layer is to be interpreted as that layer of the photoelectrode in which, in the working conditions of the electrode, the absorption of the electromagnetic radiation and the production of the electron-hole pair of the electric charge carriers occurs. Such layer can be an element of an anode (a photoanode) as well as an electrode combining a photoanode and a cathode in itself.

The patent application [5] suggests using the metal-semiconductor eutectic as a contact layer to prevent the electrode in the device for photoelectrochemical conversion from coming unglued. The eutectic layer is not the main active (that is, photoactive) layer here, which is the object of the present application.

The patent applications [9], [10] and [11] disclose electrode comprising an active layer made of eutectic material ([9]: eutectic composition of titanium dioxide, and a silicon dioxide and a tungstic trioxide; [10]: complex metal oxide particles comprising Ni as a main metal element [...] wherein said metals are selected from the group consisting of Ca, Ti, Sr, Y, Cr, rare earth metals and Bi are contained, besides Ni [...], wherein the complex metal oxide is eutectic and/or solid solution of the oxides of respective metals; [11]: eutectic oxide particles of nickel and manganese).

The invention relates to the use of an eutectic material selected from the group comprising: nickel titanate - titanium oxide, tungsten trioxide (or oxide) - titanium oxide as an active layer in an electrode, especially in the photoanode for photoelectrochemical cells.

The invention also includes an electrode, especially a photoanode for photoelectrochemical cells, comprising at least an active layer and an electric contact, optionally a contact layer situated between the active layer and the electric contact, characterised in that the active layer (1) is made of a material selected from the group including: nickel titanate - titanium oxide, tungsten trioxide (or oxide) - titanium oxide.

Preferably, the material, which the active layer is made of, is an eutectic composite, and especially an eutectic composite having a crystalline structure.

Preferably, the active layer (1) constitutes the front layer of the electrode, optionally additionally coated with a layer improving the chemical resistance or layers supporting the absorption of radiation featuring the required range of wavelength.

Preferably, the contact layer (2), placed between the active layer (1) and the electric contact (3) is protected from the outside with a coating resistant to electrolyte, preferably made of epoxy resin.

Preferably, the contact layer (2) is made of a material selected from the group comprising: conductive paste, preferable silver, graphene, paste containing nanoparticles, especially of metal, conductive medium ensuring an ohmic contact.

Preferably, the electric contact (3) is made of a conductive material, preferably of metal, especially of copper, titanium, conductive glass, ITO (Indium tin oxide), FTO (Fluorine-doped tin oxide) or of a dielectric plate coated with a conductive layer.

The patent applications [6, 7] disclose using a paste of metal as a contact layer in the electrodes for the photoelectric conversion.

In general, the production of the electrodes according to the invention consists in building a working electrode, in which the active layer is made of a material indicated in the invention.

In one of the embodiments, en electrode is built based on an eutectic material and a rear electric contact. According to the invention, the eutectic material is used to make the front plate 1 of the anode, i.e. the part which is an active (photoactive) layer and which is in direct contact with the electrolyte in the photolysis process. The eutectic material is connected by means of a silver paste (or another conductive paste or a conductive medium) with the rear contact which can be metal (e.g. copper) or another well-conducting material, such as e.g. ITO (tin oxide doped with indium), a conductive glass, a dielectric plate coated with a conductive layer etc.

The eutectic material must have small thickness (approx. 20µm) to prevent recombination processes from occurring and ensure small ohmic falls. The electrode thickness is achieved by grinding and polishing the electrode. The optimum thickness of the electrode is adjusted depending on, among others, the properties of the used eutectic material.

Alternatively, other embodiments of the invention are anticipated in which the active layer does not have the form of a plate but it is, in fact, a thin layer, e.g. sputtered or deposited on the substrate in another way, especially applied directly or indirectly on the electric contact. It is significant that in every embodiment of the invention it is an active layer. In most cases, this layer is - in the electrode working conditions - in a direct contact with the solution. However, in individual cases, it can be additionally coated with another thin layer or layers - e.g. ones which protect the active layer, improve the chemical resistance of this layer or layers supporting the absorption of radiation featuring a desired wavelength range, for example, such as the visible light.

The technology of producing large surface eutectic materials [3], and especially crystalline eutectic materials, has enabled producing eutectic crystals with the surface suitable for applications as a photoanode in photoelectrochemical cells. The eutectic materials have several very important advantages when compared to other materials:
- they are highly crystalline,
- they can be electrochemically stable,
- depending on the composition, they can have measurable photocurrent when lit with sunlight,
- they have great number of interphase boundaries which can enable better transport of the charge,
- they are materials with two or several band gaps, which can enable the absorption of the electromagnetic radiation within a wider range,
- the crystallisation of an eutectic material or a material, the appearance of which in a solid state is similar to eutectic, that is, the composites produced as a result of phase separation: at the crystallisation stage (eutectic, monotectic arrangements) and at the cooling stage (eutectoidal, spinodal arrangements) enables producing a hybrid material combining many various kinds of component phases which can be selected in such a way as to cover only a specific range of the electromagnetic radiation absorption or the widest possible range of the electromagnetic radiation (e.g. comprising the entire range of the solar radiation).

The materials which are used, according to the invention, to build the active layer of electrodes, especially materials featuring eutectic, subeutectic, hypereutectic, monotectic, submonotectic, hypermonotectic, eutectoidal, subeutectoidal and hypereutectoidal composition or materials being a product of spinodal decomposition, are obtained as a composite produced as a result of phase separation: at the crystallisation stage - i.e. the materials featuring the eutectic composition or the monotectic composition, or at the cooling stage - when eutectoidal or spinodal arrangements can be obtained.

Additionally, the eutectic materials and other materials indicated in the invention as suitable for building the active layer can be doped with various ions in order to improve their suitability for use in a photoelectrochemical electrode (among others, increase or change of the electromagnetic radiation absorption range, increase of the conductive properties). These materials can also be annealed in various gases (for example, in hydrogen) in order to improve/change their properties. These materials can also be etched and combined with other material types, such as plasmonic nanoparticles or other nanoparticles or materials in another form, improving the suitability of eutectic materials for use as an active layer in electrodes.

### Preferable Embodiments of Invention

The invention shall now be presented more closely in preferable embodiments, with references to the attached drawings on which:
- Fig. 1: presents a scheme of an electrode (photoanode) according to the invention, in an embodiment,
- Fig. 2: presents results of the current density measurement for a photoelectrode produced according to the comparative example 1, i.e. SrTiO₃-TiO₂, with the use of the 1M H₂SO₄ electrolyte,
- Fig. 3: presents results of the current density stability measurement over time for this photoelectrode, with the use of the 1M H₂SO₄ electrolyte,
- Fig. 4: presents results of the current density measurement for a photoelectrode produced according to the example 2, i.e. NiTiO₃-TiO₂, with the use of the 1M H₂SO₄ electrolyte,
- Fig. 5: presents results of the current density stability measurement over time for this photoelectrode, the additional smaller diagram placed on this drawing presents in detail the course of the photocurrent density over time from 1440 to 1448 seconds, with the use of the 1M H₂SO₄ electrolyte,
- Fig. 6: presents results of the current density measurement for a photoelectrode produced according to the example 4, i.e. WO₃-TiO₂, with the use of the 0.5M NaCl electrolyte.
- Fig. 7: presents a scheme of an electrode (photoanode), according to the invention, where the active layer of the invention (1) is made of a material featuring a monotectic composition (or a subeutectic, hypereutectic, submonotectic, hypermonotectic, eutectoidal, subeutectoidal or hypereutectoidal composition or a material being a product of spinodal decomposition).

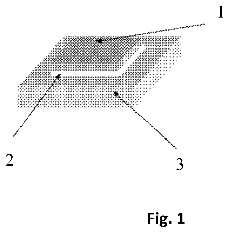

The scheme of electrode (photoanode) according to the invention, in an embodiment, is presented on fig. 1. It consists of a thin layer of the eutectic material 1 with semiconductive properties, the ohmic contact 2 made of a silver paste (or another conductive paste or a conductive medium providing an electric contact 3) and the rear electric contact 3 which can be made of metal (e.g. copper) or another material conducting electric current (such as e.g. ITO (tin oxide doped with indium), a conductive glass, a dielectric plate coated with a conductive layer etc.).

The below examples present the production of an electrode according to the invention.

### Comparative Example 1

The eutectic material 1 (strontium titanate - titanium oxide), prepared according to the procedure described in [3], is cut into 5x5mm sized and 0.2mm thick plates. The plates are polished on one side. These plates are glued by means of the silver paste 2 (available in the market) on the conductive glass 3 (FTO). Then, they constitute the front plates 1 in the produced electrodes. The electrode so prepared is annealed for 2h at the temperature of 200°C. Then, the electrode is thinned to an optimum thickness (e.g. 20µm) in course of the polishing process. The prepared electrode is protected with epoxy resin on the boundary between the eutectic material 1 and the rear electric contact 3, in the place where the conductive paste 2 is situated.

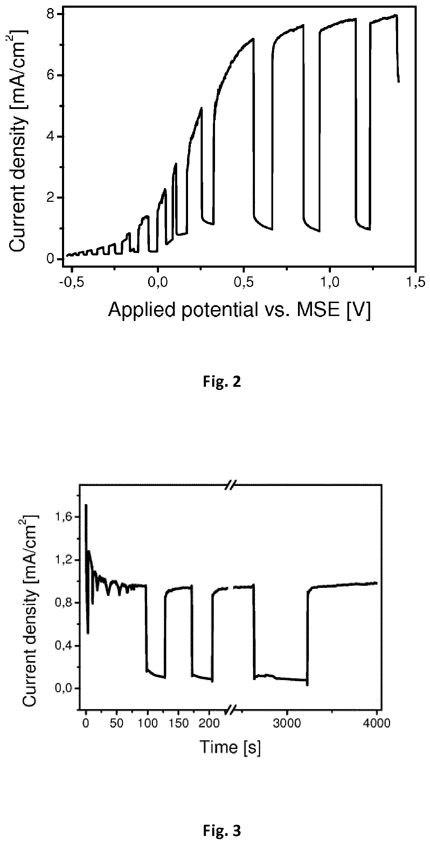

Measurements of the photocurrent density and its stability for the photoelectrode so prepared were performed. The measurement results are presented in Fig. 2 and 3.

The biggest photocurrent density for en electrode made of the SrTiO₃-TiO₂ eutectic with the thickness of 20 µm obtained under illumination with a 150 W power xenon lamp with a water filter is 8 mA/cm². The electrode made of SrTiO₃-TiO₂ shows high stability over time in the environment of the electrolyte used (1M H₂SO₄) - the time of measurement is 4000 [s].

### Example 2

The eutectic material 1 (nickel titanate - titanium oxide), prepared with the use of approx. 3mm diameter rods, made of this material, according to the procedure described in [4], is cut into 0.5mm thick discs. The discs are polished on one side. These discs are glued by means of the silver paste 2 (available in the market) on the conductive glass 3 (FTO). Then, they constitute the front plates 1 in the produced electrodes. The electrode so prepared is annealed for 2h at the temperature of 200°C. Then, the electrode is thinned to an optimum thickness (e.g. approx. 20µm) in course of the grinding / polishing process. The prepared electrode is protected with epoxy resin on the boundary between the eutectic material 1 and the rear electric contact 3, in the place where the conductive paste 2 is situated.

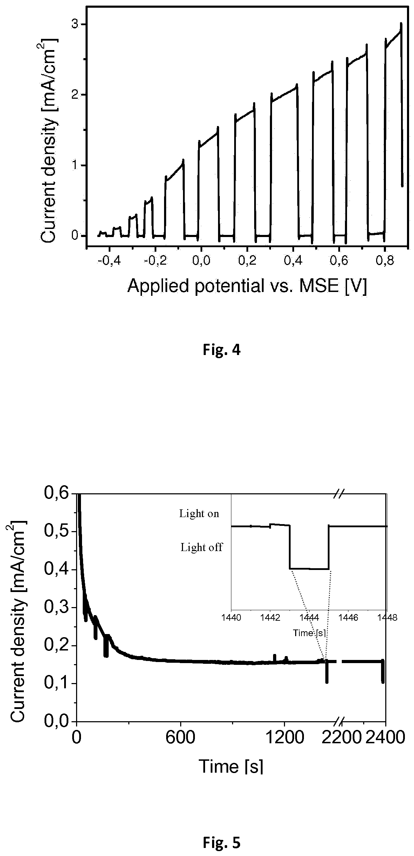

Measurements of the photocurrent density and its stability for the photoelectrode so prepared were performed. The measurement results are presented in Fig. 4 and 5. Additionally, the smaller diagram presented in Fig. 5 presents the course of the photocurrent density over time from 1440 to 1448 seconds.

The biggest photocurrent density for en electrode made of the NiTiO₃-TiO₂ eutectic with the thickness of 20 µm obtained under illumination with a 150 W power xenon lamp with a water filter is 3 mA/cm². The electrode made of NiTiO₃-TiO₂ shows high stability over time in the environment of the electrolyte used (1M H₂SO₄) - the time of measurement is 2400 [s].

### Example 3

The eutectic material 1 (tungsten trioxide (or oxide) - titanium oxide) prepared with the use of approx. 4mm diameter rods made of this material according to the procedure described in [8], is cut into 0.5mm thick discs. The discs are polished on one side. These discs are glued by means of the silver paste 2 (available in the market) on the copper plate 3. Then, they constitute the front plates 1 in the produced electrodes. The electrode so prepared is annealed for 2h at the temperature of 200°C. Then, the electrode is thinned to an optimum thickness (e.g. approx. 17µm) in course of the grinding / polishing process. The prepared electrode is protected with epoxy resin on the boundary between the eutectic material 1 and the rear electric contact 3, in the place where the conductive paste 2 is situated.

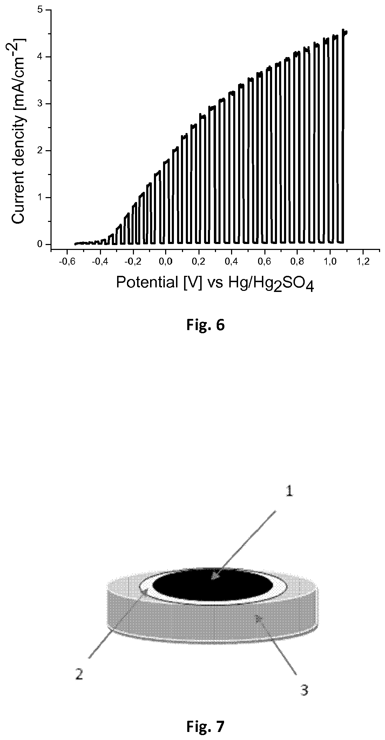

Measurements of the photocurrent density for the photoelectrode so prepared were performed. The measurement results are presented in Fig. 6.

The biggest photocurrent density for en electrode made of the WO3-TiO2 eutectic with the thickness of 17 µm obtained under illumination with a 150 W power xenon lamp with a water filter in the environment of the electrolyte used (0.5M NaCl) is over 4 mA/cm2.

### Example 4

A monotectic material (or e.g.: subeutectic, hypereutectic, submonotectic, hypermonotectic, eutectoidal, subeutectoidal or hypereutectoidal material or a material being a product of spinodal decomposition) prepared with the use of approx. 5mm diameter rods, made of the same material, according to the procedure described in [8] or plates sized 4x4mm and obtained according to the procedure described in [3], is cut into discs/plates sized 0.5mm or 0.2mm. The discs/plates are polished on one side and then glued by means of the silver paste 2 (available in the market) on the copper plate 3. Then, they constitute the front plates 1 in the produced electrodes. The electrode so prepared is annealed for 2h at the temperature of 200°C. Then, the electrode is thinned to an optimum thickness (e.g. approx. 17µm) in course of the grinding / polishing process. The prepared electrode is protected with epoxy resin on the boundary between the eutectic material 1 and the rear electric contact 3, in the place where the conductive paste 2 is situated.

Measurements of the photocurrent density for the photoelectrode so prepared (Fig. 7) shall be performed.

### Literature:

[1]. F. E. Osterloh "Inorganic Materials as Catalysts for Photochemical Splitting of Water" Chem. Mat. 20 (2008), p. 35.
[2]. B. D. Alexander, P. J. Kulesza, I. Rutkowska, R. Solarska, J. Augustyński, "Metal oxide photoanodes for solar hydrogen production", J. Mater. Chem. 18 (2008), p.2298.
[3]. K. Bieńkowski, S. Turczyński, R. Diduszko, M. Gajc, E. Górecka, D. A. Pawlak "Growth of a plate-shaped SrTiO3 - TiO2 eutectic", Crystal Growth & Design, 11 (2011), p.3935.
[4]. K. Kolodzejak, S. Turczyński, R. Diduszko, L. Klimek, D. A. Pawlak "Tb3Sc2Al3O12 - TbScO3 eutectic self-organized microstructure for meatamaterials and photonic crystals applications", Opto-Electronic Review, 14 no.3 (2006), p.205.
[5] Mikamuri Rui, Okamoto Satoshi, Kidoguchi Susumu "Photoelectric conversion element" - JP2007201007 (A) - 2007-08-09
[6] Shim Seung Hwan, Kim Jin Ah, Nam Jeong Beom, Chung In Do, Yang Ju Hong, Jung II Hyoung, Kwon Hyung Jin "Solar Cell and manufacturing method of the same" -KR20120007385 (A) - 2012-01-20
[7] Sawayama Ippei, Toma Hitoshi, Hyosu Yoshihiko, Fuijsaki Tatsuo, Mimura Toshihiko "Photovoltaic device and method of manufacturing the same" - EP 0579199 (A1)
[8] K. Kolodziejak, M. Gajc, R. Diduszko, K. Rozniatowski, S. H. Lau, B. D. Alexander, S. T. Howard, D. A. Pawlak "Synthesis and characterization of a self-organized MnTiO₃-TiO₂ eutectic" - in preparation.....
[9] JP 2006 063426 A (CENTRAL RES INST ELECT) 9 March 2006
[10] US 6 284 215 B1 (SAKAMOTO HIROYUKI [JP] ET AL) 4 September 2001
[11] EP 0 587 974 A1 (MATSUSHITA ELECTRIC IND CO LTD [JP]) 23 March 1994

## Claims

1. Use of an eutectic material selected from the group consisting of: nickel titanate - titanium oxide, tungsten trioxide (or oxide) - titanium oxide, as an active layer in a photoanode for photoelectrochemical cells comprising at least an active layer (1) and an electric contact (3), and optionally a contact layer (2) situated between the active layer and the electric contact.

2. A photoanode for photoelectrochemical cells, comprising at least an active layer (1) and an electric contact (3), and optionally a contact layer (2) situated between the active layer and the electric contact, **characterised in that** the active layer (1) is made of an eutectic material selected from the group consisting of: nickel titanate - titanium oxide, tungsten trioxide (or oxide) - titanium oxide.

3. The electrode according to claim 2, **characterised in that** the material, which the active layer is made of, is an eutectic composite having a crystalline structure.

4. The electrode according to claim 2 or 3, **characterised in that** the active layer (1) constitutes the front layer of the electrode.

5. The electrode according to claim 4, **characterised in that** the active layer (1) is additionally coated with a layer improving the chemical resistance or layers supporting the absorption of radiation featuring the required range of wavelength.

6. The electrode according to claim 2, 3, 4 or 5, **characterised in that** the contact layer (2), placed between the active layer (1) and the electric contact (3) is protected from the outside with a coating resistant to electrolyte, preferably made of epoxy resin.

7. The electrode according to any one of claims from 2 to 6, **characterised in that** the contact layer (2) is made of a material selected from the group comprising:
conductive paste, preferable silver, graphene, paste containing nanoparticles, especially of metal, conductive medium ensuring an ohmic contact.

8. The electrode according to any one of claims from 2 to 7, **characterised in that** the electric contact (3) is made of a conductive material, preferably of metal, especially of copper, titanium, conductive glass, ITO, FTO or of a dielectric plate coated with a conductive layer.

## Patentansprüche

1. Verwendung eines eutektischen Materials ausgewählt von der Gruppe beinhaltend: Nickeltitanat-Titaniumoxid, Wolframtrioxid (oder -oxid) -Titaniumoxid, als aktive Schicht in einer Photoanode für photoelektrochemische Zellen aufweisend mindestens eine aktive Schicht (1) und einen elektrischen Kontakt (3), und optional eine Kontaktschicht (2) angeordnet zwischen der aktiven Schicht und dem elektrischen Kontakt.

2. Photoanode für photoelektrochemische Zellen, aufweisend mindestens eine aktive Schicht (1) und einen elektrischen Kontakt (3), und optional eine Kontaktschicht (2) angeordnet zwischen der aktiven Schicht und dem elektrischen Kontakt, **gekennzeichnet dadurch, dass** die aktive Schicht (1) aus eutektischem Material besteht, das aus der Gruppe beinhaltend: Nickeltitanat-Titaniumoxid, Wolframtrioxid (oder-oxid) -Titaniumoxid ausgewählt ist.

3. Elektrode nach Anspruch 2, **gekennzeichnet dadurch, dass** das Material, aus dem die aktive Schicht besteht aus einem eutektischen Verbundstoff mit einer Kristallstruktur gefertigt ist.

4. Elektrode nach Anspruch 2 oder 3, **gekennzeichnet dadurch, dass** die aktive Schicht (1) die Frontschicht der Elektrode beinhaltet.

5. Elektrode nach Anspruch 4, **gekennzeichnet dadurch, dass** die aktive Schicht (1) zusätzlich mit einer Schicht versehen ist, die die chemische Beständigkeit verbessert, oder mit Schichten versehen ist, die die Strahlungsabsorption mit dem erforderlichen Wellenlängenspektrum unterstützt.

6. Elektrode nach Anspruch 2, 3, 4 oder 5, **gekennzeichnet dadurch, dass** die Kontaktschicht (2), angeordnet zwischen der aktiven Schicht (1) und dem elektrischen Kontakt (3) von außen durch eine Beschichtung geschützt ist, die gegen Elektrolyten beständig ist, und vorzugsweise aus Epoxidharz besteht.

7. Elektrode nach einem der Ansprüche von 2 bis 6, **gekennzeichnet dadurch, dass** die Kontaktschicht (2) aus einem Material gefertigt ist, das aus der Gruppe ausgewählt ist, beinhaltend:
Stromleitende Paste, vorzugsweise Silberpaste, Graphenpaste, Paste mit Nanopartikeln, insbesondere Metalpartikeln, ein stromleitendes Medium, das einen ohmschen Kontakt gewährleistet.

8. Elektrode nach eine der Ansprüche von 2 bis 7, **gekennzeichnet dadurch, dass** der elektrische Kontakt (3) aus stromleitenden Material gefertigt ist, vorzugsweise aus Metall, und insbesondere aus Kupfer, Titanium, stromleitenden Glas, ITO, FTO oder einer dielektrischen Platte versehen mit einer stromleitenden Schicht.

## Revendications

1. Utilisation d'un matériau eutectique choisi dans le groupe constitué par : titanate de nickel - oxyde de titane, trioxyde (ou oxyde) de tungstène - oxyde de titane, en tant que couche active dans une photoanode pour les cellules photoélectrochimiques comprenant au moins une couche active (1) et un contact électrique (3), et éventuellement une couche de contact (2) située entre la couche active et le contact électrique.

2. Une photoanode pour les cellules photoélectrochimiques, comprenant au moins une couche active (1) et un contact électrique (3), et éventuellement une couche de contact (2) située entre la couche active et le contact électrique, **caractérisée en ce que** la couche active (1) est constituée d'un matériau eutectique choisi dans le groupe constitué par : titanate de nickel - oxyde de titane, trioxyde (ou oxyde) de tungstène - oxyde de titane.

3. L'électrode selon la revendication 2, **caractérisée en ce que** le matériau, dont est constituée la couche active, est un composite eutectique ayant une structure cristalline.

4. L'électrode selon la revendication 2 ou 3, **caractérisée en ce que** la couche active (1) constitue la couche avant de l'électrode.

5. L'électrode selon la revendication 4, **caractérisée en ce que** la couche active (1) est en outre revêtue d'une couche d'amélioration de la résistance chimique ou des couches supportant l'absorption du rayonnement comportant la gamme de longueur d'onde requise.

6. L'électrode selon la revendication 2, 3, 4 ou 5, **caractérisée en ce que** la couche de contact (2), placée entre la couche active (1) et le contact électrique (3) est protégée de l'extérieur avec un revêtement résistant à l'électrolyte, de préférence constitué d'une résine époxy.

7. L'électrode selon l'une quelconque des revendications 2 à 6, **caractérisée en ce que** la couche de contact (2) est constituée d'un matériau choisi dans le groupe comprenant :
pâte conductrice, de préférence pâte à l'argent et au graphène, pate contenant des nanoparticules, en particulier en métal, milieu conducteur assurant un contact ohmique.

8. L'électrode selon l'une quelconque des revendications 2 à 7, **caractérisée en ce que** le contact électrique (3) est constitué d'un matériau conducteur, de préférence en métal, en particulier en cuivre, titane, verre conducteur, ITO, FTO ou d'une plaque diélectrique revêtue d'une couche conductrice.
